(19) Europäisches Patentamt
European Patent Office
Office européen des brevets

(11) Publication number: 0 052 444 A1

(12) # EUROPEAN PATENT APPLICATION

(21) Application number: 81305038.2

(22) Date of filing: 26.10.81

(51) Int. Cl.[3]: C 01 G 51/08
C 22 B 23/04

(30) Priority: 14.11.80 CA 364745

(43) Date of publication of application: 26.05.82 Bulletin 82/21

(84) Designated Contracting States: BE FR GB

(71) Applicant: Inco Limited
1 First Canadian Place
Toronto Ontario M5X 1C4(CA)

(72) Inventor: Ettel, Victor Alexander
3282 Charmaine Heights
Mississauga Ontario(CA)

(72) Inventor: Devuyst, Eric August
472 Montrose Avenue
Toronto Ontario(CA)

(72) Inventor: Illis, Alexander
2419 Lion Heart Crescent
Mississauga Ontario(CA)

(74) Representative: Hedley, Nicholas James Matthew et al,
Thames House (fifth floor) Millbank
London SWIP 4QF(GB)

(54) **A process of producing cobalt (II) chloride.**

(57) This invention is concerned with a process for dissolving oxidic trivalent cobalt compounds in hydrochloric acid to produce cobalt (II) chloride while avoiding the generation of chlorine. It includes the following steps (a) slurrying in water the trivalent cobalt compound to be dissolved and (b) treating the resulting slurry with a reduction agent preferably methanol, formaldehyde and formic acid and with hydrochloric acid. The contact of the hydrochloric acid with the slurry should occur in the presence of the reducing agent. The rate of acid addition should be controlled to maintain the slurry at a pH above 1.

EP 0 052 444 A1

Croydon Printing Company Ltd.

# A Process of Producing Cobalt (II) Chloride

The present invention relates to the dissolution of a trivalent cobalt compound in hydrochloric acid to produce cobalt (II) chloride.

Cobaltic hydroxide occurs as a by-product in the purification of nickel electrolytes in nickel electrorefining or electrowinning plants and in the purification of nickel leaching solutions. These precipitates tend to be fine black hydrous materials from which the valuable cobalt can be recovered. In many instances it is desirable to recover the cobalt as cobaltous chloride. Since cobaltic hydroxide is a strong oxidizing agent, it is found that a simple solution of the cobaltic hydroxide in hydrochloric acid is not commercially desirable due to the strong evolution of chlorine from the hydrochloric acid. It is known from the work of Syper which appears in Roczniki Chemii, Volume 47, page 43, etc. 1973 that various organic compounds including alcohol act as reductants in the presence of cobaltic hydroxide to convert the cobaltic hydroxide to the cobaltous form. Use of alcohols, aldehydes, and organic acids to reduce cobaltic hydroxide is also disclosed in the U.S. Patent 4,151,258. Neither of these references, however, contain instructions on how to produce cobaltous chloride from cobaltic hydroxide.

The present invention is based on the discovery that cobaltic hydroxide, which is sometimes known as cobaltic oxide hydrate, can be dissolved as cobaltous chloride by treating the slurry of the cobaltic hydroxide with an organic reductant, for example, methanol, formaldehyde or formic acid, and with hydrochloric acid under conditions such that contact of the acid with the cobaltic hydroxide slurry occurs in the presence of the organic reductant and such that the rate

of hydrochloric acid addition to the slurry is controlled to maintain the slurry pH above 1. Under these conditions no evolution of chlorine from the hydrochloric acid occurs.

In accordance with the invention, there is provided a process of producing cobalt (II) chloride, which comprises forming an aqueous slurry of a trivalent cobalt compound and treating the resulting slurry with hydrochloric acid in the presence of an organic reductant capable of reducing cobalt from the trivalent to the divalent state wherein the rate of hydrochloric acid addition is such that the pH of the slurry is not less than 1, whereby trivalent cobalt is reduced and dissolved as divalent cobalt.

The trivalent cobalt compound is preferably cobaltic hydroxide.

The organic reductant is preferably an alcohol or an oxidation product thereof, i.e. an aldehyde, ketone or carboxylic acid, having from 1 to 4 carbon atoms, more preferably 1 or 2 carbon atoms and advantageously 1 carbon atom. Thus the preferred organic reductants are methanol, formaldehyde and formic acid. The chemical reactions for these preferred reductants are believed to be as follows:

(1) $6\ Co(OH)_3 + 12\ HCl + CH_3OH \rightarrow 6\ CoCl_2 + CO_2 + 17\ H_2O$

(2) $4\ Co(OH)_3 + 8\ HCl + CH_2O \rightarrow 4\ CoCl_2 + CO_2 + 11\ H_2O$

(3) $2\ Co(OH)_3 + 4\ HCl + HCOOH \rightarrow 2\ CoCl_2 + Co_2 + 6\ H_2O$.

The organic reductant may be added to the cobaltic compound slurry prior to, or simultaneously with, the hydrochloric acid. When the organic reductant is added before the hydrochloric acid, a closed vessel fitted with a reflux condenser is preferably used to prevent excessive losses of the volatile organic reductant. The reduction reaction from cobaltic to cobaltous ions is temperature dependent and accordingly the initial

slurry temperature should preferably be at least about 75°C to obtain favourable reaction kinetics. The dissolution reaction is exothermic with the result that the slurry temperature tends to rise to about 90 to 95°C dependent upon the addition rate of acid to the reaction mixture.

The oxidation of methanol appears to occur in stepwise fashion through formaldehyde to formic acid and followed ultimately by the conversion of the initial methonal to $CO_2$ and water. It is found, however, that even when a large excess of methanol is present, the concentration of formic acid and formate during the reduction will be almost below the detection limit for these compounds. Upon completion of the reaction involved any excess methanol can readily be recovered and cobalt can be recovered as cobaltous chloride hexahydrates simply by evaporation of excess water.

The organic reductant is preferably used in substantial excess of that required to reduce the cobalt from the trivalent to the divalent state. All the required reductant may be added to the reaction mixture prior to the addition of HCl or it may be added gradually throughout the course of the reaction, preferably in admixture with the hydrochloric acid. Alternatively, the reductant may be added in batches during the reaction.

It is not necessary to use only one reductant in any process and two or more may be used in the course of the reaction.

The process of the invention can be used in a cobalt leach-electrowinning loop for the production of electrolytic cobalt using spent cobalt electrowinning electrolyte, hydrochloric acid and methanol to leach cobaltic hydroxide. In such a process, the chlorine evolved in the electrowinning can be used to prepare cobaltic hydroxide from impure cobalt-containing

process liquor.

Materials which may be treated by a process in accordance with the invention may have approximately the following composition: from 50% to 58% cobalt, up to 2% nickel, up to 2% iron, up to 2% copper, up to 5% sulphur.

The present invention will now be described in more detail with reference to the following Examples:

<u>Example I</u>

A water slurry was prepared by mixing 50 grams of cobaltic hydroxide in 100 millilitres of water. The cobaltic hydroxide contained, by weight, 57.6% cobalt, 0.01% copper, 0.43% nickel, 0.11% iron, 1.4% sulphur, 0.18% chloride ion, 3.61% sulphate ion, 3.08% water. When this slurry was treated with a hydrochloric acid solution containing hydrochloric acid in the ratio of two moles HCl to each mole of cobalt in an addition time of one minute, it was found that after three hours of reaction a final pH less than 1 resulted with a cobalt extraction of 56% and a cobalt concentration in solution of 79.3 grams per litre. Strong evolution of chlorine gas resulted. This process is not in accordance with the present invention.

A series of similarly prepared cobaltic hydroxide slurries was then treated <u>seriatum</u> with mixtures of hydrochloric acid and methanol in which the molar ratio of methanol to hydrochloric acid was varied from 0.165 to 1.2. The rate of addition of the HCl-methanol mixture was controlled to hold the pH in the reacting slurry above 1. The initial slurry temperature was $75^{o}C$ and during reaction the temperature increased to $90^{o}C$. 0.2 millilitres of methanol was added to the slurry just before the first addition of acid-methanol mixture. The slurry was vigorously stirred to contact the reactants. The results of four experiments carried out under four different sets of conditions are set forth in the

following Table 1. The results in the Table establish that the presence of methanol not only prevents chlorine evolution but also promotes the extraction of cobalt in solution. A large excess of methanol, however, was required to achieve complete cobalt extraction. This may be attributed to the fact that an open reaction vessel was used for the test.

TABLE 1

| Test | HCl (mole/ mole Co) | $CH_3OH$ (mole/ mole Co) | Reagents Addition Time (min) | Reaction Time (min) | Final pH | Solution Co (g/l) | Co Extraction % |
|---|---|---|---|---|---|---|---|
| 1 | 2 | 0.33 | 62 | 120 | 0.95 | 118 | 83 |
| 2 | 2 | 0.66 | 16 | 35 | 1.5 | 130 | 92 |
| 3 | 2 | 1.00 | 12 | 20 | 1.5 | 132 | 94 |
| 4 | 2 | 2.40 | 5 | 180 | 2.0 | 142 | 100 |

Example 2

A slurry was prepared containing 4oo grams of cobaltic hydroxide cake assaying 50% by weight cobalt in 0.5 litres of water in an open beaker. The slurry was reacted at 60°C with a formaldehyde-hydrochloric acid mixture added continuously at a rate corresponding to 40 millilitres of 37% formaldehyde solution and 80 millilitres of 12 normal hydrochloric acid per hour. A virtually clear leach solution was obtained after seven hours of reaction and the extraction of cobalt was 98%. The pH of the leach solution was 1.75 with a cobalt concentration in solution of 170 grams per litre as cobaltous chloride. The consumptions of HCl and formaldehyde were, respectvely, two moles of HCl and about one mole of formaldehyde per mole of the cobalt leached.

Example 3

A 400 gram sample of cobaltic hydroxide cake which had been dried at 150°C for 16 hours and had a particle size of less than -200 mesh and containing 50% by weight cobalt was slurried with 0.5 litres of water

in a glass reaction vessel open to the atmosphere through a reflux condenser. 40 millilitres of a 95% by weight methanol solution were added to the slurry, which is about double the stoichiometric amount of methanol with respect to reduction of the feed trivalent cobalt to divalent cobalt and oxidation of methanol to carbon dioxide and water. The slurry was heated to 80°C and 12 normal hydrochloric acid solution was added on pH demand at a pH setting of 2. After nine hours of reaction the extraction of cobalt in solution was 81% complete at a concentration in solution of 162 grams per litre.

Example 4

200 grams of cobalt hydroxide cake containing 50% by weight cobalt were slurried with 0.5 litres of water in a glass reactor open to the atmosphere through a reflux condenser. 40 millilitres of a 95% by weight methanol solution were added to the slurry representing about four times the stoichiometric amount of methanol for reduction of trivalent cobalt in the feed cake to divalent cobalt. The slurry was heated to 90°C and a 12 normal HCl solution was added on pH demand at a pH setting of 1.5. After four hours of reaction at 90°C the extraction of cobalt in solution was 96% at a concentration in solution of 130 grams of cobalt per litre.

Example 5

The experiment described in Example 3 was repeated and continued by adding to the reaction mixture 10 millilitres of a 98% by weight formic acid solution and the reaction was then continued for six hours at 80°C with addition of 12 normal HCl on pH demand at a pH setting of 2. At this point the extraction of cobalt in solution was 95% at a concentration of 172 grams of cobalt per litre.

Example 6

The experiment described in Example 4 was repeated and continued by adding to the reaction mixture 10 millilitres of 98% by weight formic acid solution and the reaction continued for two hours at 90°C with a 12 normal HCl solution being added upon pH demand at a pH setting of 1.5. The extraction of cobalt in solution was 98.5% complete at a concentration of 133 grams per litre of cobalt.

Example 7

Cobalt chloride leach solutions obtained in Examples 3 and 6 were evaporated at 105°C until the cobalt concentration in solution was approximately 400 grams per litre. The concentrated solutions were then slowly cooled while being stirred at 1,000 revolutions per minute. Crystallization of 60 to 70% of the cobalt as cobaltous chloride hexahydrate onto the walls of the container occurred. The solids were recovered after filtering and drying in air. Analyses of the feed cobaltic hydroxide and of the cobaltous chloride hexahydrate resulting are shown in the following Table 2.

Table 2

| Element | Methanol Leach Example 4 | | Methanol and Formic Acid Leach - Example 6 | |
|---|---|---|---|---|
| | Feed* $Co(OH)_3$ (wt. %) | $CoCl_2$ $6H_2O$ (wt.%) | Feed* $Co(OH)_3$ (wt. %) | $CoCl_2$ $6H_2O$ (wt.%) |
| Co | 25.3 | 25.3 | 27.1 | 27.1 |
| Ni | 0.42 | 0.29 | 0.17 | 0.11 |
| Cu | 0.003 | 0.0004 | 0.006 | 0.0012 |
| Pb | 0.004 | 0.001 | 0.0003 | 0.001 |
| Fe | 0.060 | 0.001 | 0.035 | 0.009 |
| Ca | ---- | 0.004 | ---- | 0.001 |
| Mg | ---- | 0.0004 | ---- | 0.0002 |
| Na | 0.60 | 0.049 | 0.014 | 0.002 |
| Mn | 0.011 | 0.003 | 0.007 | 0.003 |

* For the sake of comparison, the percentage of cobalt in the feed cake is set equal to the amount of cobalt in the cobaltous chloride salt and the amounts of impurities in the feed cake are adjusted accordingly. In reality, wet feed cake usually contains about 25% Co and dry cake about 50% Co.

Claims

1. A process of producing coablt (II) chloride, which comprises forming an aqueous slurry of a trivalent cobalt compound and treating the resulting slurry with hydrochloric acid in the presence of an organic reductant capable of reducing cobalt from the trivalent to the divalent state, wherein the rate of hydrochloric acid addition is such that the pH of the slurry is not less than 1, whereby trivalent cobalt is reduced and dissolved as divalent cobalt.

2. A process as claimed in claim 1, wherein the organic reductant is an alcohol or an oxidation product thereof containing from 1 to 4 carbon atoms.

3. A process as claimed in claim 2, wherein the alcohol or oxidation product thereof is methanol, formaldehyde or formic acid.

4. A process as claimed in any one of claims 1 to 3, wherein the amount of the organic reductant added is in substantial excess of that required to reduce all the cobalt from the trivalent to the divalent state.

5. A process as claimed in any one of claims 1 to 4, which is performed at a temperature in excess of 75°C.

6. A process as claimed in any one of claims 1 to 5, wherein the organic reductant is added in admixture with hydrochloric acid.

7. A process as claimed in any one of claims 1 to 6, which includes the further step of evaporating the solution containing cobalt chloride to yield cobalt (II) chloride in crystallized form.

8. Cobalt chloride produced by a process as claimed in any one of claims 1 to 7.

0052444

European Patent Office

# EUROPEAN SEARCH REPORT

Application number
EP 81 30 5038.2

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| D,X | US - A - 4 151 258 (R. CRNOJEVICH et al.)<br>* claim 1 *<br>-- | 1-3 | C 01 G 51/08<br>C 22 B 23/04 |
| A | DE - B - 1 079 019 (STE GENERALE METALLURGIQUE DE HOBOKEN)<br>---- | | |

TECHNICAL FIELDS SEARCHED (Int. Cl.3)

C 01 B 9/00
C 01 G 1/00
C 01 G 51/00
C 22 B 23/00
C 25 C 1/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 17-12-1981 | KESTEN |

EPO Form 1503.1 06.78